# EUROPEAN PATENT APPLICATION

(11) **EP 4 567 976 A1**
(43) Date of publication of application: **11.06.2025**
(21) Application number: 24201533.7
(22) Date of filing: 20.09.2024
(51) Int. Cl.: H01M 50/103, H01M 50/15, H01M 50/176, H01M 50/325, H01M 50/553, H01M 10/6553

(54) **TOP COVER ASSEMBLY AND CELL**

(30) Priority: 06.12.2023 CN 202311679845; 06.12.2023 CN 202323334052 U; 21.03.2024 WO PCT/CN2024/082968
(71) Applicant: Eve Power Co., Ltd., Jingmen, Hubei 448000 (CN)
(72) Inventor: CHEN, Xianyang, Jingmen (CN); SUN, Fei, Jingmen (CN); QIU, Zhangheng, Jingmen (CN); ZHOU, Yu, Jingmen (CN); YUAN, Dingding, Jingmen (CN)
(74) Representative: Murgitroyd & Company

(57) **Abstract**

A top cover assembly and a cell are disclosed by this disclosure. The top cover assembly includes: a top cover; a plurality of first poles arranged on the top cover at intervals along a first direction; a plurality of second poles arranged on the top cover at intervals along the first direction, at least one of the plurality of the first poles and at least one of the plurality of the second poles are arranged adjacent along the first direction; the plurality of the first poles and the plurality of the second poles are arranged at a same end of the top cover, or the plurality of the first poles are arranged near one end of the top cover, and the plurality of the second poles are arranged near the other end of the top cover.

## Description

### CROSS REFERENCE TO RELATED APPLICATIONS

This application claims priority to a Chinese patent applications submitted to the China National Intellectual Property Administration on December 06, 2023, with application numbers 202323334052.6 and 202311679845.3 respectively, which is incorporated by reference in the present application in its entirety.

### TECHNICAL FIELD

The following disclosure relates to a technical field of cells, in particular to a top cover assembly and a cell.

### BACKGROUND

With the increasing capacity of energy storage batteries, the ability requirements of a battery structural subassembly to carry current are getting higher and higher. For an original conventional structural, due to a limited ability to carry current and a high internal resistance, when a capacity of a cell is increased, a temperature of an internal structural subassembly of the cell will rise during a charging and discharging process, and heat accumulation will occur inside the cell. When the heat inside the cell gathers too much, it will lead to problems such as instability of the electrolyte inside the cell and shrinkage of the separator, thereby reducing the safety of the cell.

### SUMMARY

The present application provides a top cover assembly and a cell to solve the above technical problems.

The present disclosure provides a top cover assembly. The top cover assembly includes: a top cover; a plurality of first poles arranged on the top cover at intervals; a plurality of second poles arranged on the top cover at intervals, at least one of the plurality of the first poles and at least one of the plurality of the second poles are arranged adjacent along the first direction, the plurality of the first poles are arranged on the top cover at intervals in the first direction and the plurality of the second poles are arranged on the top cover at intervals in the first direction, the plurality of the first poles and the plurality of the second poles are arranged at a same end of the top cover, or the plurality of the first poles are arranged near one end of the top cover, and the plurality of the second poles are arranged near the other end of the top cover.

The present disclosure also provides a cell, the cell includes: the top cover assembly and an electrode assembly, the electrode assembly has a plurality of tabs arranged at intervals along the first direction, and the top cover assembly is arranged on the electrode assembly and connected with the tab through a connecting piece.

Beneficial effects of the present disclosure are as following: in the top cover assembly provided by the present disclosure, a plurality of first poles and a plurality of second poles are arranged on the top cover, and the plurality of the first poles are arranged on the top cover at intervals, and the plurality of the second poles are also arranged on the top cover at intervals. This arrangement can not only meet the output requirements of the top cover assembly, but also can improve the overcurrent ability of the cells to ensure the temperature stability when the cells are used, so as to improve the safety performance of the cells.

For the cells provided in this disclosure, the electrode assemblies are arranged in two and arranged in sequence in the second direction, so as to improve the current output capacity of the cells to meet the use needs of users.

### BRIEF DESCRIPTION OF THE DRAWINGS

FIG. 1 is a top view schematic view of a top cover assembly provided by a first embodiment of the present disclosure.
FIG. 2 is a top view schematic view of a top cover assembly provided by a second embodiment of the present disclosure.
FIG. 3 is a top view schematic view of a top cover assembly provided by a third embodiment of the present disclosure.
FIG. 4 is a top view schematic view of the top cover assembly provided by the fourth embodiment of the present disclosure.
FIG. 5 is a structural schematic diagram of a connecting component according to one embodiment of the present disclosure.
FIG. 6 is a structural schematic diagram of a connecting component according to another embodiment of the present disclosure.
FIG. 7 is a schematic diagram of the structure of the top cover assembly according to the second embodiment of the present disclosure.
FIG. 8 is a schematic diagram of the structure of the top cover assembly according to the fourth embodiment of the present disclosure.
FIG. 9 is a schematic diagram of an electrode assembly according to one embodiment of the present disclosure.
FIG. 10 is a schematic diagram of an electrode assembly according to another embodiment of the present disclosure.

### Attached image markup description:

10: top cover;
20: first pole;
30: second pole;
40: connecting component; 41. a first connecting piece; 42. a second connecting piece;
50: explosion-proof valve;
60: aluminum sheet;
70: lower plastic plate; 71. Insulation baffle;
80: electrode assembly;
91: a first tab; 92: second tab; X: first direction; Y: second direction.

### DETAILED DESCRIPTION OF THE PREFERRED EMBODIMENTS

In the description of the present application, unless otherwise specified and limited, the term "connected to each other", "connected" or "fixed" is to be construed in a broad sense, for example, as fixedly connected, detachably connected, or integrated; mechanically connected or electrically connected; directly connected to each other or indirectly connected to each other via an intermediary; or internally connected between two elements or interactional between two elements. Meanings of the preceding terms in the present application may be understood according to situations.

In the present application, unless otherwise specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of this embodiment, the terms "up", "down", "right", and other azimuth or positional relationships are based on the azimuth or positional relationships shown in the accompanying drawings, only for the convenience of description and simplification of operation, and not to indicate or imply that the referred device or element must have a specific azimuth, be constructed and operated in a specific azimuth, and therefore cannot be understood as a limitation to this application. In addition, the terms "first" and "second" are used only to distinguish in description and have no special meaning.

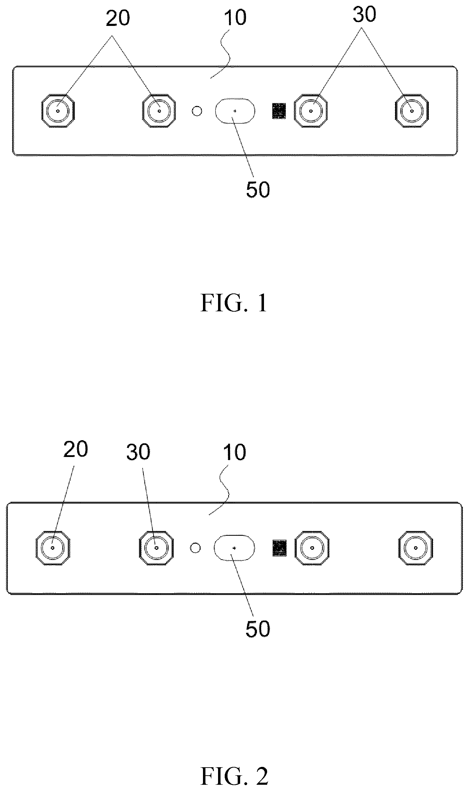

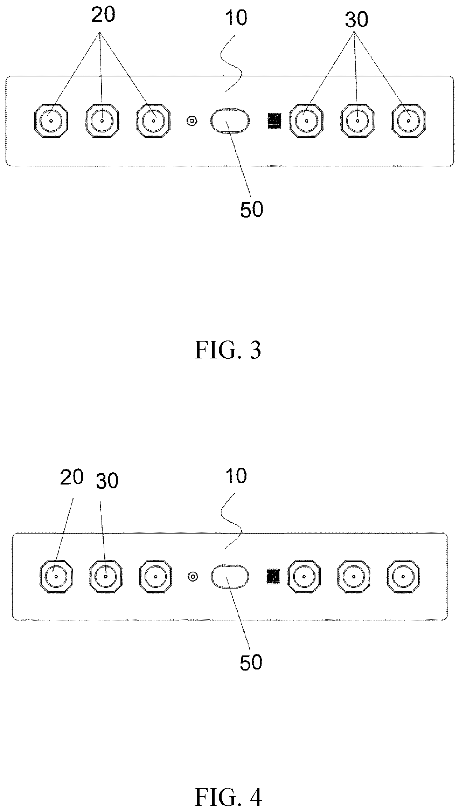

As shown in FIG. 1 to FIG. 4, FIG. 7 and FIG. 8, in a first aspect, embodiments of the present disclosure provide a top cover assembly, the top cover assembly includes a top cover 10, a plurality of first poles 20 and a plurality of second poles 30. Wherein, the plurality of the first poles 20 are arranged on the top cover 10 at intervals, the plurality of the second poles 30 are arranged on the top cover 10 at intervals, at least one of the plurality of the first pole 20 and at least one of the plurality of the second pole 30 are arranged adjacent in the first direction X, the plurality of the first poles 20 are arranged on the top cover 10 at intervals in the first direction and the plurality of the second poles 30 are arranged on the top cover 10 at intervals in the first direction X, the plurality of the first poles 20 and the plurality of the second poles 30 are arranged on the top cover 10 at the same end of the top cover 10, or the plurality of the first poles 20 are arranged near one end of the top cover 10, and the plurality of the second poles 30 are arranged near the other end of the top cover 10.

Applying the technical proposal of the present disclosure, the plurality of the first poles 20 and the plurality of the second poles 30 are arranged on the top cover 10, and the plurality of the first poles 20 are arranged on the top cover 10 at intervals, and the plurality of the second poles 30 are also arranged on the top cover 10 at intervals. Such arrangement can not only meet the output requirements of the top cover assembly, but also can improve the overcurrent ability of the cells, ensure the temperature stability when the cells are used, so as to improve the safety performance of the cells. At least one of the plurality of the first pole 20 and at least one of the plurality of the second pole 30 are arranged adjacent in the first direction, or a plurality of first poles 20 are arranged near one end of the top cover 10, and a plurality of second poles 30 are arranged near the other end of the top cover 10, so that the diversity of the top cover assembly can be improved to meet the use requirements in different environments, thereby improving the applicability and application range of the device.

In the present disclosure, when the at least one of the plurality of the first pole 20 and the at least one of the plurality of the second pole 30 are disposed adjacent in the first direction, remaining first poles 20 and remaining second poles 30 may be disposed in parallel in the second direction Y.

Further, the plurality of the first poles 20 and the plurality of the second poles 30 are arranged at intervals along a same straight line. This arrangement can not only make the top cover assembly more beautiful and tidy as a whole, but also facilitate the connection with the external assembly. Alternatively, the plurality of the first poles 20 and the plurality of the second poles 30 may also be arranged at intervals in other directions, as long as the usage requirements of the device can be met. In the present disclosure, the spacing arrangement specifically means that the plurality of the first poles 20 and the plurality of the second poles 30 are located on the same straight line. The poles of the two adjacent poles are not limited here, and the specific setting conditions should be selected according to the use environment of the device.

Specifically, the plurality of the first poles 20 and the plurality of the second poles 30 are sequentially alternately arranged in the first direction X. This arrangement makes the first pole 20 and the second pole 30 uniformly distributed on the top cover 10, so that the current density during charging and discharging of the cells can be more uniform, so that the heat generation of the cells can be reduced, and the stable operation of the cells can be maintained.

Further, the number of the first poles 20 is equal to the number of the second poles 30. This arrangement can ensure the stability of the cell when it is outputted, so as to maintain the normal operation of the cell.

Wherein, the first pole 20 is a positive pole, and the second pole 30 is a negative pole.

In the embodiments of the present disclosure, when the number of the first pole 20 and the number of the second pole 30 are both two, the two of the first poles 20 and the two of second poles 30 are arranged and combined by one of orders: positive-positive-negative-negative, positive-negative-negative-positive, positive-negative-positive-negative, etc., as long as the use requirements of the device can be met. When the number of the first pole 20 and the number of the second pole 30 are both 3, the three of the first poles 20 and the three of second poles 30 are arranged and combined by one of orders: positive-positive-positive-negative-negative-negative, positive-positive-negative-positive-positive-negative, positive-positive-negative-positive-negative-positive, positive-positive-negative-negative-positive-positive, positive-negative-positive-positive-negative-positive, etc., so that the applicability and scope of application of the cell can be improved as much as possible.

At the same time, a distance between any two of the plurality of the first poles 20 and a distance between the plurality of the second poles 30 can also be set to a same distance. Through this uniform distribution design, the current density distribution of the pole pieces is more uniform during the cells are charged and discharged, and the plurality of the poles can evenly share the current to improve the stable operation of the cell.

Of course, in other embodiments of the present disclosure, the number of the first pole 20 and the number of the second pole 30 may not be limited, and the specific arrangement conditions should be selected according to the use requirements of the device, so that the use requirements in different environments can be met.

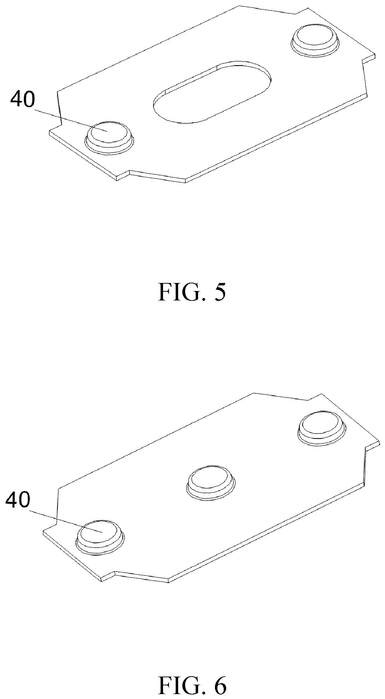

As shown in FIG. 5 and FIG 6, the top cover assembly also includes a plurality of connecting components 40 disposed on one side of the top cover 10 away from the plurality of the first poles 20, and the connecting components 40 are respectively connected to the plurality of the first poles 20 or the plurality of the second poles 30. In this manner, the first pole 20 and the second pole 30 can be connected to an electrode assembly 80 through the connecting member 40, so as to conduct the internal conduction of the cell. When the polarities of the two adjacent poles are the same, they can be connected in parallel through the connecting components in the figure, so as to facilitate the connection of the multi-pole columns of the cell.

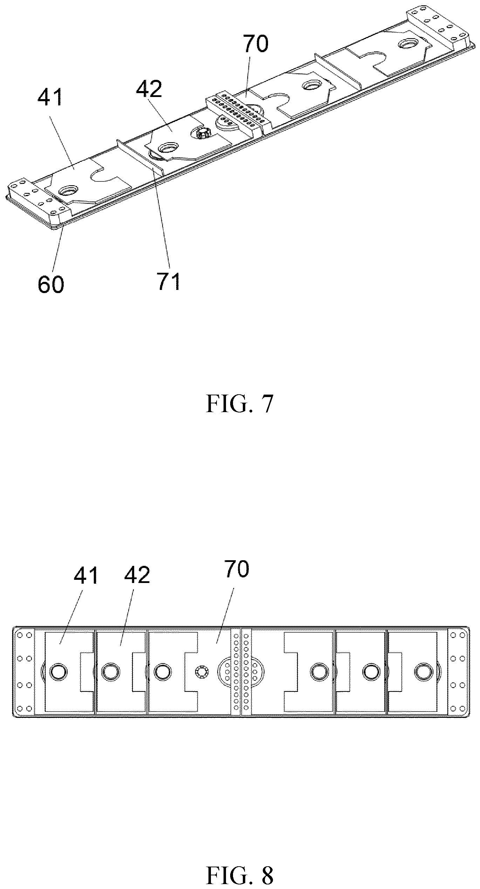

As shown in FIG. 7 and FIG. 8, the connecting component 40 includes a first connecting component 41 for paralleling the plurality of the first poles 20 and a second connecting component 42 for paralleling the plurality of the second poles 30, the first connecting component 41 and the second connecting component 42 are insulated from each other. When the poles of the two adjacent poles are different, it is necessary to use a single connecting piece to connect with the poles, which can ensure the safety during the poles are connected to each other, so as to prevent a short circuit inside the cell, thereby prolonging a service life of the cell.

In the present disclosure, an insulation baffle 71 is set between the first connecting sheets 41 and the second connecting sheet 42 which are adjacent to each other, so that a risk of short circuit of the cell during use can be avoided, and the stability of the cell during operation can be further maintained.

The connecting component 40 has a protrusion, and a bottom of the first pole 20 and a bottom of the second pole 30 have grooves, and shapes and sizes of the protrusions and the grooves are mutually compatible, so that the connecting component 40 can be fitted with the first pole 20 or the second pole 30 during installation, which not only reduces the installation difficulty of the connecting component 40 and the first pole 20 or the second pole 30, but also has a simple structure, and can also reduce the production cost of the top cover assembly, so as to realize the mass production of the device.

Specifically, the top cover assembly further includes an explosion-proof valve 50 disposed on the top cover 10 and spaced from the first poles 20 and the second poles 30. This arrangement is mainly to avoid dangerous events such as explosion or fire when the cell is over charged or over discharged. When an expansion is occurred inside the cell occurs, the explosion-proof valve 50 will be opened to reduce the pressure inside the cell, so that the cell can be prevented from being damaged to other components. This is conducive to improving the safety of the cell when it is used.

Of course, in other embodiments of the present disclosure, the number of explosion-proof valves 50 may not be limited, for example, the number of explosion-proof valves 50 may be two, three and other numbers, as long as the use requirements of the device can be met. At the same time, a liquid injection hole is defined in the top cover 10, so that it is convenient for a user to add electrolyte to the interior of the cell to ensure uniform infiltration inside the cell, thereby improving the electrical performance of the cell.

Further, the top cover 10 includes an aluminum sheet 60 and a lower plastic plate 70 sequentially arranged from top to bottom, the first poles 20 and the second poles 30 respectively pierce and connect to the aluminum sheet 60 and the lower plastic plate 70, and the connecting component 40 is set on one side of the lower plastic plate 70 away from the aluminum sheet 60. The structure is simple and easy to process, which can not only reduce the processing cost of the device, but also meet the use requirements of the cell during operation.

In the present disclosure, a sealing ring (not shown in the figure) is also provided on the plurality of the first poles 20 and the plurality of the second poles 30. This arrangement can prevent the electrolyte from seeping out from the plurality of the first poles 20 and the plurality of the second poles 30, thereby causing the phenomenon of liquid leakage, so as to ensure the stability of the cell during operation, so as to further prolong the service life of the cell.

In a second aspect, the embodiments of the present disclosure provide a cell. The cell includes the top cover assembly above-mentioned and an electrode assembly 80, the electrode assembly 80 has a plurality of tabs arranged at intervals in the first direction X. The top cover assembly is provided on the electrode assembly 80 and is connected to the tabs through a connecting piece. In the present disclosure, the number of the electrode assemblies 80 is two, the electrode assemblies 80 are arranged sequentially in the second direction Y, so that the current output capability of the cell can be improved to meet the use demand of the user.

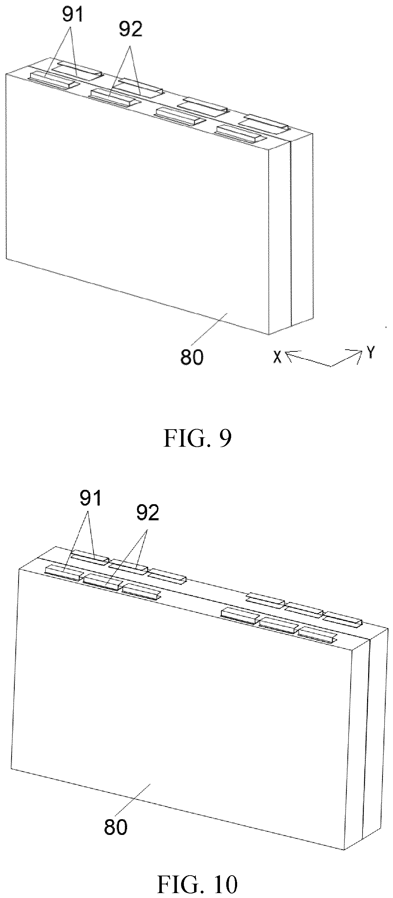

As shown in FIG. 9 and FIG. 10, the tabs include a plurality of first tabs 91 and a plurality of second tabs 92, the plurality of the first tabs 91 are set in correspondence with the plurality of the first poles 20 and the plurality of the second tabs 92 are set in correspondence with the plurality of the second poles 30. In the present disclosure, a number and an arrangement of the plurality of the first tabs 91 and the plurality of the second tabs 92 correspond to the plurality of the first poles 20 and the plurality of the second poles 30, the unity and integrity of the cell structure can be ensured.

In the present disclosure, a length of the cell extending in the first direction X is L, a length of the cell extending in the second direction Y is H, a length of the connecting component 40 extending in the first direction X is L1, a length of the connecting component 40 extending in the second direction is H1, and a length of the tab extending in the second direction Y is L2, wherein 1/4 L > L1 > 1/9 L, H ≥ H1 > 1/3 H, and 1/2 L > L2 > 1/8 L.

According to the technical proposal of the present disclosure, the plurality of the first poles 20 and the plurality of the second poles 30 are arranged on the top cover 10, and the plurality of the first poles 20 are arranged on the top cover 10 at intervals, and the plurality of the second poles 30 are also arranged on the top cover 10 at intervals. Such arrangement can not only meet the output requirements of the top cover assembly, but also can improve the overcurrent ability of the cells, ensure the temperature stability when the cells are used, so as to improve the safety performance of the cells. At least one of the plurality of the first poles 20 and at least one of the plurality of the second poles 30 are arranged adjacent in the first direction, or the plurality of the first poles 20 are arranged near one end of the top cover 10, and the plurality of the second poles 30 are arranged near the other end of the top cover 10, so that the diversity of the top cover assembly can be improved to meet the use requirements in different environments, thereby improving the applicability and application range of the device.

## Claims

1. A top cover assembly, wherein the top cover assembly comprising:
a top cover (10);
a plurality of first poles (20) arranged on the top cover (10) at intervals;
a plurality of second poles (30) arranged on the top cover (10) at intervals; at least one of the plurality of the first poles (20) and at least one of the plurality of the second poles (30) are arranged adjacent along a first direction;
the plurality of the first poles (20) arranged on the top cover (10) at intervals in the first direction, the plurality of the second poles (30) arranged on the top cover (10) at intervals in the first direction, the plurality of the first poles (20) and the plurality of the second poles (30) are arranged at a same end of the top cover (10), or the plurality of the first poles (20) are arranged near one end of the top cover (10), and the plurality of the second poles (30) are arranged near the other end of the top cover (10).

2. The top cover assembly according to claim 1, wherein the plurality of the first poles (20) and the plurality of the second poles (30) are sequentially alternately arranged in the first direction.

3. The top cover assembly according to claim 1, wherein a number of the first poles (20) is equal to a number of the second poles (30).

4. The top cover assembly according to any one of claim 1 to claim 3, wherein the top cover assembly further comprises an explosion-proof valve (50) disposed on the top cover (10) and spaced from the first poles (20) and the second poles (30).

5. The top cover assembly according to claim 1, wherein the top cover assembly also comprises a plurality of connecting components (40) disposed on one side of the top cover (10) away from the plurality of the first poles (20), and the connecting components (40) are respectively connected to the plurality of the first pole (20) or the plurality of the second pole (30).

6. The top cover assembly according to claim 5, wherein the connecting component (40) comprises a first connecting component (41) for paralleling the plurality of the first poles (20) and a second connecting component (42) for paralleling the plurality of the second poles (30), the first connecting component (41) and the second connecting component (42) are insulated from each other.

7. The top cover assembly according to claim 5, wherein the top cover (10) includes an aluminum sheet (60) and a lower plastic plate (70) sequentially arranged from top to bottom, the first poles (20) and the second poles (30) respectively pierce and connect to the aluminum sheet (60) and the lower plastic plate (70), and the connecting component (40) is set on one side of the lower plastic plate (70) away from the aluminum sheet (60).

8. A cell, wherein the cell comprises:
the top cover assembly according to any one of claim 1 to claim 4 and claim 6 to claim 7;
electrode assemblies (80), wherein the electrode assemblies (80) have a plurality of tabs arranged at intervals in the first direction, the top cover assembly is provided over the electrode assemblies (80) and is connected to the tabs through the connecting component of the top cover assembly.

9. The cell according to claim 8, wherein the tabs include first tabs (91) and second tabs (92), the first tabs (91) are set in correspondence with the first poles (20) and the second tabs (92) are set in correspondence with the second poles (30).

10. The top cover assembly according to claim 1, wherein when at least one of the plurality of the first poles (20) and at least one of the plurality of the second poles (30) are disposed adjacent in the first direction, remaining first poles (20) and remaining second poles (30) are disposed in parallel in the second direction.

11. The top cover assembly according to claim 5, wherein the connecting component (40) has a protrusion, and a bottom of the first pole (20) and a bottom of the second pole (30) have grooves, and the protrusions and the grooves are mutually compatible.

12. The top cover assembly according to claim 6, wherein an insulation baffle (71) is set between the first connecting sheets (41) and the second connecting sheet (42) which are adjacent to each other.

13. The cell according to claim 8, wherein a length of the cell extending in the first direction is L, a length of the connecting component (40) extending in the first direction is L1, wherein 1/4 L>L1 > 1/9L.

14. The cell according to claim 13, wherein a length of the cell extending in the second direction is H, a length of the connecting component 40 extending in the second direction is H1, wherein H ≥ H1 > 1/3 H.

15. The cell according to claim 13, wherein a length of the tab extending in the second direction is L2, wherein 1/2 L > L2 > 1/8 L.
